# EUROPÄISCHE PATENTSCHRIFT

(11) **EP 3 831 500 B1**
(45) Veröffentlichungstag und Bekanntmachung des Hinweises auf die Patenterteilung: **30.08.2023**
(21) Anmeldenummer: 20208047.9
(22) Anmeldetag: 17.11.2020
(51) Int. Cl.: F16L 37/00, F17C 13/04, F16L 37/32, F16L 37/23

(54) **ANDOCKVORRICHTUNG, DOSIERVORRICHTUNG SOWIE BEHÄLTER**
DOCKING DEVICE, DOSING DEVICE AND CONTAINER
DISPOSITIF D'ARRIMAGE, DISPOSITIF DE DOSAGE ET RÉCIPIENT

(30) Priorität: 19.11.2019 DE 202019004683 U
(43) Veröffentlichungstag der Anmeldung: 09.06.2021
(73) Patentinhaber: Volkmann GmbH, 59494 Soest (DE)
(72) Erfinder: SÜMMERMANN, Konrad, 59494 Soest (DE)
(74) Vertreter: Grosse Schumacher Knauer von Hirschhausen

(56) Entgegenhaltungen:
- WO-A2-2005/049229
- DE-U1- 29 500 976
- DE-U1-202016 002 402
- US-A- 6 003 679

## Beschreibung

### GEBIET DER ERFINDUNG

Die Erfindung betrifft eine Andockvorrichtung nach dem Oberbegriff des Anspruchs 1 . Demnach sind ein oberes und ein unteres Andocksegment vorgesehen, beide zum An- und Abdocken von einem oberen Behältermodul eines mehrteiligen Behälters für ein Fluid und einem unteren Behältermodul des mehrteiligen Behälters. Die Andockvorrichtung dient dem mechanischen Verbinden, nämlich zum An- und Abdocken, von einem oberen Behältermodul eines mehrteiligen Behälters für ein Fluid und einem unteren Behältermodul des mehrteiligen Behälters. Die Ventilvorrichtung dient dem Unterbrechen einer Strömung des Fluids. Ein Fluid ist ein fließfähiges Material, d. h. ein Material mit einer endlichen Viskosität, oder eine fließfähige Materialmischung, beispielsweise ein (zähflüssiges Material/Gemenge, ein Pulver, ein Puder, ein granulares oder stückiges Material/Gemenge oder ein (kohäsionsloses oder kohäsives) Schüttgut oder ein Gas.

Die Andockvorrichtung respektive die Ventilvorrichtung umfasst ein oberes Andocksegment, welches mit einem oberen Verbindungsmittel an einer Öffnung des oberen Behältermoduls befestigbar ist, und ein unteres Andocksegment, welches mit einem unteren Verbindungsmittel an einer Öffnung des unteren Behältermoduls befestigbar ist. Das Verbindungsmittel kann als (lösbarer) mechanischer Flansch gebildet sein oder eine (dauerhafte) Klebe- oder Schweißverbindung umfassen. Das Fluid gelangt schwerkraftbedingt und/oder druckbedingt von dem oberen Behälter durch einen Kanal der Andockvorrichtung respektive der Ventilvorrichtung dann in den unteren Behälter, wenn sich ein mittels einer in dem oberen oder in dem unteren Andockelement angeordneten Betätigungsanordnung bewegbarer Ventilkörper in dem Kanal der Vorrichtung in einer geöffneten Ventilkörperstellung befindet. Die druckbedingte Strömungsrichtung des Fluids kann durch Beaufschlagung eines Druckes, insbesondere von Differenzdrücken, bestimmbar sein. Es kann auch vorgesehen sein, dass das Fluid auftriebbedingt und/oder druckbedingt von dem unteren in den oberen Behälter gelangt. In dem oberen Andocksegment ist ein oberer Kanalabschnitt angeordnet und in dem unteren Andocksegment ein unterer Kanalabschnitt.

Ein oberer Andockbereich des oberen Kanalabschnitts und/oder des oberen Andocksegmentes und ein unterer Andockbereich des unteren Kanalabschnitts und/oder des unteren Andocksegments sind, insbesondere durch Formschluss und/oder Kraftschluss, fluiddicht so ineinander und/oder aneinander anordbar, dass das Fluid durch den nach außen dichten Kanal bei geöffneter Ventilkörperstellung hindurchfließt. Nach außen dicht meint hier dicht gegenüber der Umgebung der beschriebenen Vorrichtung, so dass das Fluid von dem oberen Behältermodul in das untere Behältermodul gelangt, nicht jedoch in die Umgebung von Behälter und Andockvorrichtung. In dem oberen Kanalabschnitt und/oder in dem unteren Kanalabschnitt ist eine Betätigungsanordnung angeordnet, mit der u. A. der Ventilkörper so betätigbar ist, dass er von einer geöffneten Ventilkörperstellung in eine geschlossene Ventilkörperstellung oder von einer geschlossenen Ventilkörperstellung in eine geöffnete Ventilkörperstellung bewegbar ist. Das Bewegen des Ventilkörpers erfolgt beispielsweise durch Verschieben, etwa in einer Linearführung, oder durch Drehen, etwa durch eine Schraubbewegung mit entsprechender Gewindeführung. Die Erfindung betrifft auch eine Dosiervorrichtung zum Dosieren des Flusses eines Fluids aus einem oberen Behältermodul eines Behälters in ein unteres Behältermodul des Behälters, oder aus einem unteren Behältermodul in ein oberes Behältermodul, nach dem Oberbegriff des Anspruchs 18.

Die Erfindung betrifft außerdem einen Behälter für ein Fluid nach dem Oberbegriff des Anspruchs 20. Demnach umfasst der Behälter zumindest ein Behältermodul, insbesondere ein oberes und ein unters Behältermodul.

### TECHNOLOGISCHER HINTERGRUND

Bei Schüttgütern, insbesondere bei Pulvern, soll ein Schüttgutvorrat regelmäßig einem Schüttguthandling zur Verfügung gestellt werden. Ist der Schüttgutvorrat aufgebraucht muss neues Schüttgut bereitgestellt werden. Dies geschieht mit Schüttgut-Behältern, welche an Handling-Behälter für das Schüttgut-Handling mit Ventilvorrichtungen angedockt werden. Das An- und Abdocken soll einerseits sicher erfolgen, d. h. es soll keine Leckage entstehen oder Fehler beim An-/Abdocken. Außerdem soll beim An-/Abdocken kein oder möglichst wenig Schüttgut in die Umgebung des Behälters respektive der Behältermodule gelangen. Hier setzt die Erfindung ein. Die DE202016002402U1, US6003679A, DE29500976U1 und die WO2005049229A2 offenbaren Schüttgut-Behälter.

### DARSTELLUNG DER ERFINDUNG

Der Erfindung liegt die Aufgabe zu Grunde, Maßnahmen anzugeben, mit denen eine möglichst einfache und sichere Handhabung einer Schüttgut-Behälter-(Modul-)Verbindung gelingt, wobei möglichst wenig Behälterinhalt (Schüttgut) in die Behälter-Umgebung gelangen soll. Diese Aufgabe wird durch eine Andockvorrichtung nach Anspruch 1 gelöst. Vorteilhafte Ausgestaltungen der Andockvorrichtung ergeben sich aus den Unteransprüchen. Die Andockvorrichtung ist demnach dadurch gekennzeichnet, dass die Betätigungsanordnung zumindest eine zumindest ein Sperrmittel umfassende Sperranordnung umfasst, wobei oberes und unteres Andocksegment miteinander stabil verbindbar, insbesondere arretierbar, sind, indem das Sperrmittel in eine Sperrposition gelangt. Beim Andockvorgang ist beim Betätigen der Betätigungsanordnung zuerst das Sperrmittel betätigbar und anschließend der Ventilkörper. Beim Abdockvorgang ist beim Betätigen der Betätigungsanordnung zuerst der Ventilkörper betätigbar und anschließend das Sperrmittel. Beim Andocken wird erst arretiert, dann geöffnet, beim Abdocken wird erst geschlossen, dann die Arretierung gelöst. Ein Öffnen ohne Arretierung ist nicht möglich, da die Betätigungsanordnung eine Fail-Save-Funktion umfasst, welche ohne Arretierung ein Bewegen des Ventilkörpers blockiert. Beim Andocken wird ein Betätigungsstift der Betätigungsanordnung beispielsweise nach unten bewegt, im ersten Bewegungsabschnitt bei der Abwärtsbewegung wird arretiert, im zweiten, daran anschließenden Bewegungsabschnitt bei der Abwärtsbewegung wird das Ventil im oberen Andockelement geöffnet, sofern der Sperr- respektive Arretiervorgang zuvor mechanisch korrekt beendet wurde.. Beim Abdocken bewegt sich der Betätigungsstift entgegengesetzt, d. h. nach oben, so dass im ersten Bewegungsabschnitt der Aufwärtsbewegung das Ventil geschlossen wird und im zweiten, daran anschließenden Bewegungsabschnitt der Aufwärtsbewegung die Arretierung gelöst wird. Auf diese Weise ist garantiert, dass das Ventil erst geöffnet wird, wenn das Sperrglied die Sperrposition erreicht hat, d. h. nach der Arretierung.

Es kann zweckmäßig sein, wenn der Kanal einen kreisrunden Querschnitt aufweist, insbesondere zumindest abschnittsweise einen ringförmigen Querschnitt, wobei die Kreissymmetrie und/oder Ringsymmetrie des Kanals eine Kanal-Symmetrieachse umfasst. Bevorzugt ist in dem Kanal, insbesondere entlang der Kanal-Symmetrieachse, ein Kernelement angeordnet, in welchem die Betätigungsanordnung und/ oder die Sperranordnung, insbesondere zumindest teilweise beweglich, angeordnet ist/sind. Das Kernelement kann über zumindest einen Steg, vorzugsweise über mehrere über dem Umfang des Kanals im Wesentlichen gleichmäßig verteilte Stege an der Kanalinnenwand befestigt sein. Wenn die Betätigungsanordnung zumindest einen Betätigungsstift umfasst, kann dieser parallel zur oder entlang der Kanal-Symmetrieachse bewegbar sein. Zweckmäßigerweise ist das Sperrmittel der Sperranordnung in radialer Richtung bewegbar. So gelingt ein stabiler Eingriff des Sperrmittels in eine dafür vorgesehene Ausnehmung oder in einen dafür vorgesehenen Hohlraum in der Vorrichtung. Das Bewegen des Sperrmittels kann eine radiale Bewegungskomponente umfassen, d. h. eine Bewegungskomponente, welche zu der Bewegungsrichtung der Andockvorrichtung respektive Ventilvorrichtung beim Andocken oder Abdocken senkrecht verläuft.

Die Betätigungsanordnung kann einen Betätigungsstift zum Manipulieren des Ventilkörpers umfassen, welcher eine erste Schrägfläche umfasst, an welcher das Sperrmittel der Sperranordnung anliegt, so dass bei einer axialen Bewegung des Betätigungsstifts das Sperrmittel mit radialer Richtungskomponente bewegbar ist. Bei einer Axial- oder Längsbewegung des Betätigungsstiftes wird das Sperrmittel durch die dafür vorgesehene Schrägfläche radial oder senkrecht zur Bewegungsrichtung des Betätigungsstiftes aus einer Neutralposition heraus in eine Sperrposition bewegt. Dies gelingt insbesondere dann, wenn die Andockelemente korrekt in- oder aneinander sitzen und wenn Sperrmittel und Sperrmittel-Ausnehmung zueinander benachbart angeordnet sind.

Das zumindest eine Sperrmittel kann als Kugel oder als Tonne oder als Keil oder als Stift gebildet sein, wobei das Sperrmittel beim Andocken in eine Sperrausnehmung bewegbar ist. Die Sperrausnehmung kann als Tasche oder Bohrung oder Hohlraum gebildet sein. Das Sperrmittel kann im unteren Andocksegment und die Sperrausnehmung im oberen Andocksegment angeordnet sein. Alternativ können das Sperrmittel im oberen Andocksegment und die Sperrausnehmung im unteren Andocksegment angeordnet sein. Es kann auch eine Sperranordnung vorgesehen sein, bei der Sperrmittel und Sperrausnehmung jeweils in oberem und unterem Andocksegment vorgesehen sind.

Im Hinblick auf ein homogenes Strömungsverhalten des Schüttguts kann vorgesehen sein, dass der Ventilkörper zumindest abschnittsweise kegelförmig gebildet ist. Der Ventilkörper kann gegen die Wirkung zumindest einer Ventilkörper-Feder aus der geschlossenen Stellung in die geöffnete Stellung bewegbar sein. D. h. im angedockten Zustand kann der Ventilkörper gegen die Wirkung der Ventilkörper-Feder geöffnet werden und wenn die Vorrichtung abdocken soll, wird eine Rückstellung des Ventilkörpers in die geschlossene Position durch die Wirkung der Ventilkörper-Feder unterstützt. Durch die Wirkung der Ventilkörper-Feder verbleibt der Ventilkörper in abgedocktem Zustand in seiner geschlossenen Stellung. Die Ventilkörper-Feder trägt demnach dazu bei, dass der dem Ventilkörper zugeordnete Kanalabschnitt geschlossen wird. Beim Bewegen des Ventilkörpers zum Öffnen des Kanals muss die Federkraft der Ventilkörper-Feder zunächst überwunden werden. Der Ventilkörper kann außerdem mehrteilig gebildet sein, beispielsweise zweiteilig. So kann der Ventilkörper einen oberen Ventilkörperteil umfassen und einen unteren Ventilkörperteil. Jedem Ventilkörperteil kann eine Ventilkörper-Feder zugeordnet sein.

Im Hinblick auf ein An- und Abdocken möglichst ohne Verunreinigung der Umgebung der erfindungsgemäßen Vorrichtung kann vorgesehen sein, dass das obere Andocksegment und/oder das untere Andocksegment eine Segment-Dichtfläche umfasst, welche in geschlossener Ventilkörperstellung mit zumindest einer Ventilkörper-Dichtfläche in Kontakt steht. Die Dichtflächen können jeweils ringförmig gebildet sein. Durch die Ring- und Kegel-Geometrie der Komponenten der Vorrichtung können die an der Oberfläche der abgedockten Segmente zugänglichen Dichtflächenabschnitte vergleichsweise gering sein, beispielsweise in der Größenordnung einer Ringfläche basierend auf einer Ringbreite von etwa 1 mm oder weniger als etwa 1 mm, oder, insbesondere bei Kanal-Durchmessern von mehr als etwa 20 cm, basierend auf einer Ringbreite von wenigen mm, insbesondere weniger als etwa 3 mm. Durch die geringe Ringbreite der von außen zugänglichen Dichtflächenabschnitte wird eine Wahrscheinlichkeit einer Verschmutzung der Umgebung der Vorrichtung ebenso reduziert wie die Wahrscheinlichkeit dafür, dass Verunreinigungen über die Dichtanordnung in das Innere der Vorrichtung und somit in das Innere der Behältermodule gelangen. Das Schüttguthandling wird dadurch erheblich sicherer und reiner.

Die Segment-Dichtfläche und die Ventilkörper-Dichtfläche können ringförmig gebildet sein, wobei in oder an der Segment-Dichtfläche und/oder in oder an der Ventilkörperdichtfläche zumindest ein, insbesondere jeweils ein, Dichtelement angeordnet ist. Das Dichtelement kann durch die Wirkung einer (Ventilkörper-)Feder dichtend mit einer Dichtkraft beaufschlagbar sein. Als Dichtelement kommt ein Dichtring mit rundem oder ovalem Querschnitt (O-Ring) in Frage oder mit (recht-)eckigem Querschnitt. Der Dichtring kann aus einem elastischen Material gebildet sein und insofern beim Andocken elastisch verformbar. Beim Abdocken kehrt der Dichtring in seine ursprüngliche Form zurück. Im Hinblick auf Wartungsaspekte kann es zweckmäßig sein, wenn die Dichtanordnung so konstruiert ist, dass ein Dichtelement eines Segmentes mit einem Dichtelement des anderen Segmentes in angedocktem Zustand kontaktiert ist. Im oder am oberen Andockbereich und/oder im oder am unteren Andockbereich kann zumindest ein Andockdichtelement, insbesondere jeweils ein Andockdichtelement, angeordnet sein. Zumindest ein Dichtelement kann so angeordnet sein, dass es sowohl Ventilkörper-Dichtelement als auch Andock-Dichtelement ist. D. h. es dichtet - je nach Stellung des Betätigungsstiftes - zwischen den Andockbereichen der Segmente und/oder zwischen Kanal und Ventilkörper.

Damit bei geöffneter Ventilkörperstellung kein Schüttgut in die Umgebung gelangt, ist ein Bewegen des Ventilkörpers in die geöffnete Ventilkörperstellung durch die Betätigungsanordnung bevorzugt nur dann möglich, wenn das Sperrmittel der Sperranordnung in der Sperrposition ist. Die Sperrposition ist diejenige Position, in der das Sperrmittel in der korrespondierenden Sperrausnehmung positioniert ist. Wenn das Sperrmittel nicht in die Sperrposition gelangt, etwa bei fehlerhaftem Gebrauch der Vorrichtung oder bei bestimmungswidrigem Gebrauch der Vorrichtung, ist ein Bewegen des Ventilkörpers aus der geschlossenen Stellung heraus insofern nicht möglich, als der dafür erforderliche Sperreingriff des Sperrmittels fehlt. Insofern umfasst die Vorrichtung eine Ausfall-Sicherung respektive eine Fail-Save-Funktion. Fail-Save-Funktion und Arretier-Funktion laufen simultan ab.

Die Betätigungsanordnung kann mechanisch, hydraulisch und/oder pneumatisch betätigbar sein. Hierzu kann ein von außen zugänglicher Hebel vorgesehen sein, der manuell oder über einen Stellmotor betrieben werden kann. Sofern keine Linearbewegung des Betätigungsstiftes vorgesehen ist, sondern eine Schraubbewegung, kann eine mechanische Drehdurchführung nach außen vorgesehen sein. Ein Bewegen des Betätigungsstiftes kann auch über einen hydraulischen oder pneumatischen (Über-)Druck oder durch (Elektro-)Magnetismus erfolgen. Hierzu kann ein von außen zugängliches Anschlussmittel für eine externe Druckleitung vorgesehen sein sowie eine interne Druckleitung. Die Betätigungsanordnung und/oder der Betätigungsstift können eine, insbesondere schräge und/oder konische, Wirkfläche umfassen, über die eine Kraft und/oder ein Moment auf die Betätigungsanordnung und/oder den Betätigungsstift übertragbar ist.

Damit beim An- und/oder Abdocken eine Rückstellung der Komponenten der Betätigungsanordnung gelingt, kann vorgesehen sein, dass die Betätigungsanordnung und/oder der Betätigungsstift gegen die Wirkung einer Rückstellfeder betätigbar ist/sind. Die Betätigungsanordnung kann ferner magnetisch, insbesondere elektromagnetisch, betätigbar sein

Damit in abgedocktem Zustand der Vorrichtung beide Behältermodule dicht verschließbar sind, kann es zweckmäßig sein, wenn der Ventilkörper zweiteilig gebildet ist, wobei ein oberer Ventilkörperteil in dem oberen Andocksegment angeordnet ist und ein unterer Ventilkörperteil in dem unteren Andocksegment. Jeder Ventilkörperteil kann gegen die Wirkung einer Feder aus seiner geschlossenen Stellung bewegbar sein. Eine Bewegung der Ventilkörperteile zum Öffnen des Kanals erfolgt simultan, indem mittels Betätigungs- und Sperranordnung beide Ventilkörperteile aneinander gekoppelt werden. Ein Entkoppeln der Ventilkörperteile erfolgt durch ein Entsperren der Sperranordnung, wobei dies nur in geschlossener Ventilkörperstellung gelingt. Zumindest ein Dichtelement kann durch die Wirkung einer Ventilkörper-Feder dichtend mit einer Dichtkraft beaufschlagbar sein. D. h. die Ventilkörper-Feder, welche den Ventilkörper mit einer Federkraft beaufschlägt, kann dazu beitragen, dass die Dichtung im dichtenden Zustand gequetscht wird, so dass die dichtende Wirkung der Dichtung durch die Ventilkörper-Feder verstärkt wird.

Es kann vorgesehen sein, dass in oder an dem oberen und/oder unteren Andockelement ein, insbesondere in axial- oder Längsrichtung, bewegbares Sicherungselement angeordnet ist, womit die Andockelemente der Vorrichtung in jeweils geschlossener Ventilkörperstellung gegen Öffnen mechanisch sicherbar sind. Mit der Sicherung soll ein Öffnen zumindest eines der Kanalabschnitte verhindert werden, nämlich wenn die Kanalabschnitte nicht aneinander angedockt sind. Es soll damit vermieden werden, dass in getrenntem Zustand der Vorrichtung aus einem der mit der Vorrichtung verbundenen Behältermodule Fluid austritt. Das Sicherungselement kann die Wirkung eines Schlosses haben, mit dem der Ventilkörper verriegelbar ist.

Wenn an dem oberen und/oder unteren Andockelement ein Positions- oder Lage-Erfassungs-Mittel angeordnet ist, wird die Position oder Lage, insbesondere die Endposition oder Endlage, des oberen/unteren Andockelementes relativ zum unteren/oberen Andockelement erfassbar, insbesondere mechanisch, pneumatisch, elektrisch, elektronisch, elektro-magnetisch und/oder elektrooptisch. Mit der Endlagenerfassung ist erfassbar, ob ein Andockelement seine gewünschte Endlage beim Andocken erreicht hat. Eine Bestätigung der Endlage könnte in ein Signal oder in eine Wirkung übersetzt werden, so dass die Fluidverbindung als geöffnet, verriegelt und somit funktional freigegeben erkannt wird. Das Positions- oder Lage-Erfassungs-Mittel kann als bewegbarer Stift oder Nocken gebildet sein, welcher beispielsweise dann einen Druckkanal oder einen Schaltkontakt freigibt, wenn die bestimmungsgemäße Endlage des oberen/unteren Andockelementes respektive des Ventilkörpers erreicht ist. Sofern ein Druckkanal freigegeben wird, was zu einem pneumatischen Signal führt, kann über eine der involvierten Leitungen/Kanäle ein Druckschalter betätigt werden, der das Lage-Erfassungs-Signal weitergibt. Durch die Positions- oder Lage-Erfassung wird angezeigt, dass sowohl das Andocken als auch das Ventilöffnen störungsfrei funktionierten, so dass eine Fluidbewegung sicher und ohne Leckage stattfinden kann. Ein Bewegen des Positions- oder Lage-Erfassungs-Mittels kann dadurch erfolgen, dass beispielsweise einer der Ventilkörper bei seiner Bewegung das Lage-Erfassungs-Mittel mechanisch kontaktiert und dieses dann mitbewegt. Indem das Lage-Erfassungs-Mittel aus einer Position "beliebige Lage" in eine Position "Endlage" bewegt respektive verschwenkt und/oder verschoben wird, wird das entsprechende Lage-Erfassungs-Signal ausgelöst. Sobald das Lage-Erfassungs-Signal anzeigt, dass die gewünschte Endlage erreicht ist, weiß der Anwender, dass nun eine störungsfreie Fluidbewegung stattfinden wird.

Bevorzugt kann zumindest ein druckausgleichendes Mittel vorgesehen sein, mit dem ein teilweiser oder vollständiger Druckausgleich zwischen oberem Behältermodul und unterem Behältermodul, insbesondere während und/oder nach einer Fluidbewegung, herstellbar ist. Das druckausgleichende Mittel kann als Kanal (Bypass) zwischen oberem und unterem Kanalabschnitt gebildet sein. Mit dem druckausgleichenden Mittel wird ein Druckunterschied abgebaut, welcher sich zwischen den Behältermodulen dann bilden kann, wenn Fluid aus dem einen in den anderen Behälter gelangt. Indem sich einer der Behältermodule entleert, wird dort Innendruck reduziert, wobei sich simultan in dem sich füllenden Behältermodul an Druckanstieg bildet. Die Differenz zwischen Druckanstieg und Druck-Reduktion verbleibt im Bereich der Vorrichtung als Druckunterschied, der mit dem druckausgleichenden Mittel abbaubar ist.

Im Hinblick auf Reinigungsmaßnahmen respektive ein Reinigungsverfahren kann es zweckmäßig sein, wenn die Vorrichtung zumindest ein stoßbegasendes Mittel und/oder druckbegasendes Mittel umfasst, mit dem zumindest eine Vorrichtungskomponente, insbesondere eine obere/untere Dichtung, mit einer, insbesondere stoßweisen, Gasströmung zum Reinigen der angeströmten Komponente beaufschlagbar ist. Das stoß- und/oder druckbegasende Mittel dient der Beseitigung von Fluidresten vor, während oder nach dem Andocken, insbesondere zur Verbesserung der dichtenden Wirkung der Vorrichtung und/oder zum Verlängern der Lebensdauer der Vorrichtungskomponenten.

In oder an dem oberen und/oder unteren Ventilkörper kann zumindest ein Vibrationsmittel angeordnet sein, womit der obere und/oder untere Ventilkörperteil mit zumindest einer, insbesondere mechanischen, Schwingung beaufschlagbar ist. Durch die Vibration wird eine Fließverbesserung des Fluids erreicht.

Eine Maßnahme für eine möglichst einfache und sichere Handhabung einer Schüttgut-Behälter-(Modul-)Verbindung, wobei möglichst wenig Behälterinhalt (Schüttgut) in die Behälter-Umgebung gelangen soll, ergibt sich schließlich durch eine Dosiervorrichtung nach Anspruch 19. Die Dosiervorrichtung dient dem Dosieren des Flusses eines Fluids aus einem oberen (unterem) Behältermodul eines Behälters in ein unteres (oberes) Behältermodul des Behälters. Die Dosiervorrichtung umfasst eine hierin beschriebene Andockvorrichtung oder eine hierin beschriebene Ventilvorrichtung. Dabei ist eine Steuer- und/oder Regelanordnung vorgesehen, die die Ventilkörperstellung eines (ein- oder mehrteiligen) Ventilkörpers steuert und/oder regelt. Mit der Dosiervorrichtung kann die Ventilkörperstellung verändert werden, ohne dass die Arretierung der Andocksegmente verändert wird, d. h. die Andocksegmente verbleiben während des Dosiervorgangs arretiert. Neben den Ventilkörperstellungen "geöffnet" (maximaler Fluid-Fluss) und "geschlossen" (kein Fluss) können weitere Ventilkörperstellungen vorgesehen sein, bei denen der Ventilkörper in eine Stellung zwischen "geschlossen" und "geöffnet" gebracht wird. Damit wird ein Fluss des Fluids einstellbar, nämlich zwischen den Extremwerten betreffend den maximalen Fluss und keinen Fluss, etwa "mäßiger Fluss" oder "hoher Fluss" oder weitere Fluss-Einstellungen.

Damit der Fluss durch den Kanal der Vorrichtung auch bei Schüttgut mit inhomogenem Fließverhalten möglichst konstant, insbesondere konstant dosierbar, bleibt, kann ein Fluss-Homogenisierungs-Mittel vorgesehen sein, etwa eine Vibrationseinrichtung zum Beaufschlagen zumindest einer Komponente der Vorrichtung mit zumindest einer, insbesondere mechanischen und auf das Fluid zumindest anteilig übertragbaren, Schwingung. Die Vibrationseinrichtung kann somit die hierin beschriebene Vorrichtung mit einer mechanischen, etwa linearen oder kreisförmigen, Schwingungsanregung beaufschlagen. Das Ausbilden von lokalen Schüttgut-Klumpen oder -Brocken oder -Brücken oder -Formationen sowie das Anhaften von Schüttgut an und/oder in dem Kanal werden dadurch reduziert und der effektive Schüttgut-Fluss ist homogener.

Eine Maßnahmen für eine möglichst einfache und sichere Handhabung einer Schüttgut-Behälter-(Modul-)Verbindung, wobei möglichst wenig Behälterinhalt (Schüttgut) in die Behälter-Umgebung gelangen soll, ergibt sich außerdem durch einen Behälter nach Anspruch 21. Der Behälter umfasst eine hierin beschriebene Andockvorrichtung und/oder eine hierein beschriebene Ventilvorrichtung, und/oder eine hierein beschriebene Dosiervorrichtung. Sofern nur ein Behältermodul vorgesehen ist, dient die Vorrichtung als Ventilvorrichtung oder Entleer-Vorrichtung mit einem zusätzlichen Sicherheitsfeature, bei dem das passive Andockelement eine Schlüssel-Funktion für das aktive Andocksegment erfüllt.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel einer Andockvorrichtung dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen
- Fig. 1-5: eine Andockvorrichtung in verschiedenen Ansichten,
- Fig. 6-10: eine Variante einer Andockvorrichtung in verschiedenen Ansichten,
- Fig. 11: eine Variante einer Andockvorrichtung in seitlicher Schnittansicht und
- Fig. 12: eine weitere Variante einer Andockvorrichtung in seitlicher Schnittansicht..

### DETAILLIERTE BESCHREIBUNG VON AUSFÜHRUNGSBEISPIELEN

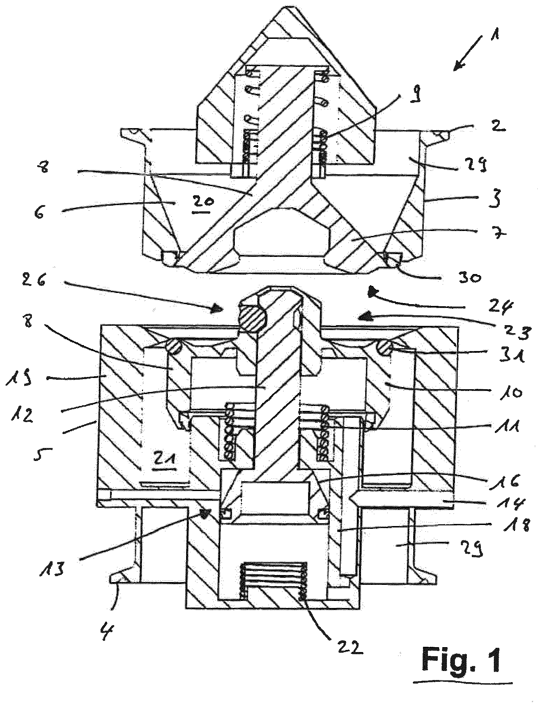

Die Figuren 1 bis 12 zeigen unterschiedliche Ansichten von mehreren Varianten einer Vorrichtung 1, die entweder erfindungsgemäße Andockvorrichtung 1 ist oder erfindungsgemäße Ventilvorrichtung 1. Eine Schnittansicht einer Andockvorrichtung 1 zeigt die Fig. 1. Die Vorrichtung 1 dient dem An- und Abdocken und fluidischen Verbinden von zwei Behältermodulen, welche in den Figuren jeweils nicht dargestellt sind. Eine Öffnung des oberen Behältermoduls kann mit dem oberen Flansch 2 des oberen Andocksegmentes 3 verbunden werden. Eine Öffnung des unteren Behältermoduls kann mit dem unteren Flansch 4 des unteren Andocksegments 5 verbunden werden.

Die Vorrichtung 1 umfasst einen Kanal 6, durch welchen das in den Behältern befindliche Material von dem einen in das andere Behältermodul gelangen kann. Bei Schüttgütern gelangt das Material von dem oberen in den unteren Behälter, bei einem aufsteigenden Gas von dem unteren in den oberen Behälter.

Gemäß Fig. 1 ist eine Anordnung in Schnittansicht dargestellt, wobei oberes Andocksegment 3 und unteres Andocksegment 5 voneinander räumlich getrennt sind. Diese Anordnung entspricht der Situation unmittelbar vor Beginn des Andockvorgangs. In dem oberen Andocksegment 3 ist ein konisch geformter oberer Ventilkörperteil 7 eines zweiteiligen Ventilkörpers 8 angeordnet, welcher gegen die Wirkung der oberen Ventilkörperfeder 9 nach unten, d. h. in Richtung des unteren Andocksegments 5 bewegbar ist.

In dem unteren Andocksegment 5 ist der untere Ventilkörperteil 10 des zweiteiligen Ventilkörpers 8 angeordnet, welcher gegen die Wirkung der unteren Ventilkörperfeder 11 bewegbar ist. In dem unteren Andocksegment 5 ist außerdem ein Betätigungsstift 12 einer Betätigungsanordnung 13 angeordnet, welcher ebenfalls nach unten bewegbar ist, etwa mittels Hebelkraft oder pneumatischer respektive hydraulischer Wirkung.

Sofern zum Betätigen der Betätigungsanordnung 13 eine Pneumatik vorgesehen sein soll, kann eine Leitung 15 mit einem Anschlussmittel 14 verbunden sein, wodurch eine als zweite Schrägfläche gebildete Wirkfläche 16 der Betätigungsanordnung 13 mit einer Kraft respektive einem Druck beaufschlagbar ist. Die Betätigungsanordnung umfasst außerdem eine Rückstellfeder 22.

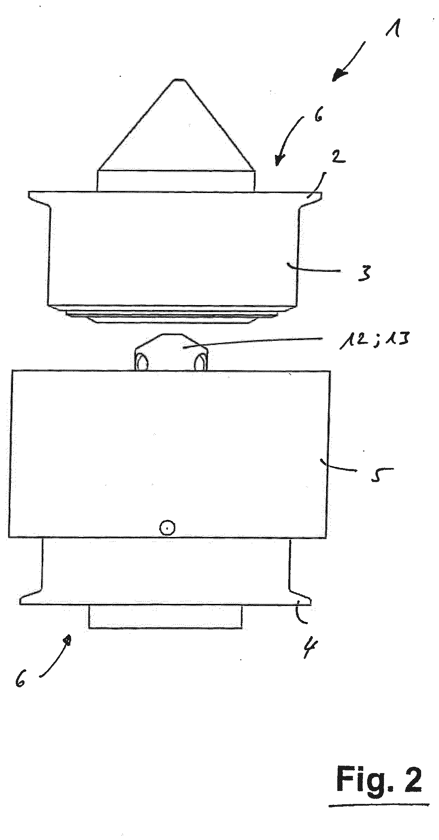

Eine seitliche Ansicht der Vorrichtung 1 kann der Fig. 2 entnommen werden. Die Vorrichtung 1 hat eine senkrecht verlaufende Symmetrieachse 17, welche identisch ist mit der Kanal-Symmetrieachse. Ventilkörper 8 und Betätigungsstift 12 bewegen sich in einer Kernregion der Vorrichtung 1, insbesondere in einem Kernelement 18. Gemäß der Schnittansicht der Fig. 1 ist zu erkennen, dass das Kernelement 18 an mehreren Stegen 29 an der Wand 19 der Vorrichtung 1 angeordnet ist. Der sich so ergebende im Wesentlichen ringförmige Kanal 6 wird aus einem oberen Kanalabschnitt 20 im oberen Andocksegment 3 und einem unteren Kanalabschnitt 21 im unteren Andocksegment 5 gebildet.

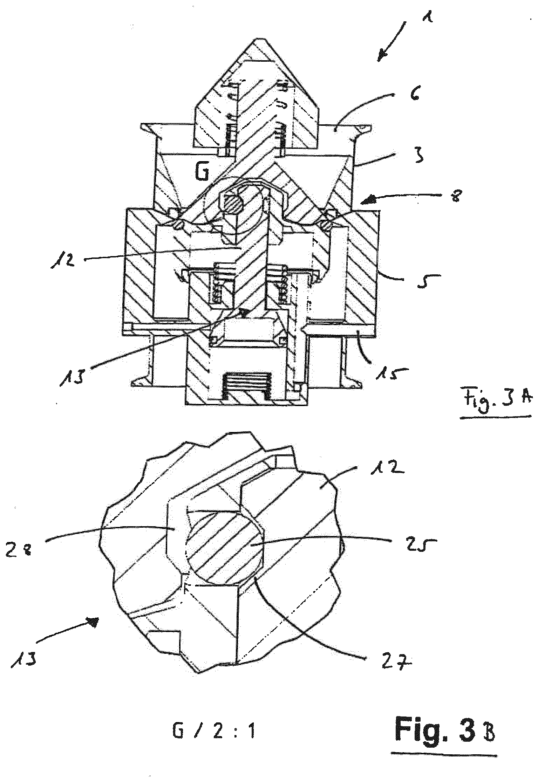

Gemäß Fig. 3A, welche eine seitliche Schnittansicht der Vorrichtung 1 gemäß der Figuren 1 und 2 zeigt, sind die Andocksegmente 3, 5 der Vorrichtung 1 ineinander respektive aufeinander angeordnet. Dies gelingt durch Formschluss, d. h. die Form des unteren Andockbereichs 23 des unteren Andocksegments 5 passt schlüssig in die korrespondierende Aussparung des oberen Andockbereichs 24 des oberen Andocksegments 3. Zu der Anordnung gemäß der Fig. 3A gelangt man, indem das obere Behältermodul mit dem daran angeordneten oberen Andocksegment 3 auf das untere Behältermodul mit dem daran angeordneten unteren Andocksegment 5 aufgesetzt wird. Aufgrund des Formschlusses ist ein schiefes oder fehlerhaftes Aufsetzen des einen Moduls auf das andere Modul sehr unwahrscheinlich, wodurch die Handhabbarkeit der Modulverbindung erheblich vereinfacht wird bei gleichzeitiger Verbesserung der Sicherheit der Handhabbarkeit.

Dies umso mehr, als ein Öffnen des Kanals durch Verschieben des Ventilkörpers in die geöffnete Ventilkörperstellung erst dann möglich ist, wenn das Arretieren mechanisch korrekt abgeschlossen ist. Ohne Arretieren verbleibt das Sperrmittel in seiner Ausgangsposition und ein weiteres Verschieben des Betätigungsstiftes und somit ein Bewegen des Ventilkörpers ist nicht möglich, da das Sperrmittel außerhalb der Sperrposition ein Bewegen des Betätigungsstiftes zusammen mit dem Ventilkörper blockiert. Das Sperrmittel dient also nicht nur dem Arretieren der Andocksegmente sondern auch dem Unterbleiben einer Bewegung des Ventilkörpers im Falle einer fehelenden korrekten Arretierung der Andocksegmente. Zwar kann der Betätigungsstift sich bei fehlerhaftem Andocken weiterhin (abwärts) bewegen, die Bewegung wird aber mangels Sperreingriff des Sperrmittels nicht auf den Ventilkörper übertragen. Prinzipiell bildet das passive Andocksegment, d. h. das Andocksegment, in welchem die Betätigungsanordnung nicht angeordnet ist, eine Art "Schlüssel" für das aktive Andocksegment, d. h. für das Andocksegment mit Betätigungsanordnung. Ohne "Schlüsse", d. h. ohne korrekt angedocktes passives Andocksegment,, kann der Ventilkörper nicht aus der geschlossenen Stellung heraus bewegt werden. Diese "Fail-Safe"-Eigenschaft der Andock- respektive Ventilvorrichtung bringt eine erhebliche Verbesserung des Schüttgut- Handlings, insbesondere im Hinblick auf Sicherheitsaspekte. Eine derart sichere Handhabung ist immer dann gewünscht, wenn von dem Schüttgut respektive Behälterinhalt ein Sicherheitsrisiko ausgeht. Dies kann bei Gefahrenstoffen der Fall sein oder bei solchen Stoffen, die Ursache für ein Gesundheitsrisiko sein können. Als Beispiel sind Pulver zu nennen, die für die Haut oder die Atemwege schädlich sein können, oder solche Stoffe, die mit der Umwelt chemisch reagieren, etwa entzündliche Stoffe.

Ein Detail der Fig. 3A zeigt die Fig. 3B.Gemäß der Anordnung der Figuren 3A/B ist das Sperrmittel 25 der Sperranordnung 26 in einer neutralen, d. h. nicht sperrenden respektive nicht arretierenden Stellung. Das Sperrmittel 25 ist als Kugel gebildet. Es kann vorgesehen sein, dass die Sperranordnung 26 ein Sperrmittel 25 umfasst oder mehrere Sperrmittel 25. Die Sperrmittel 25 können über den Umfang des Betätigungsstiftes 12, worin sie angeordnet sind, gleichmäßig verteilt sein.

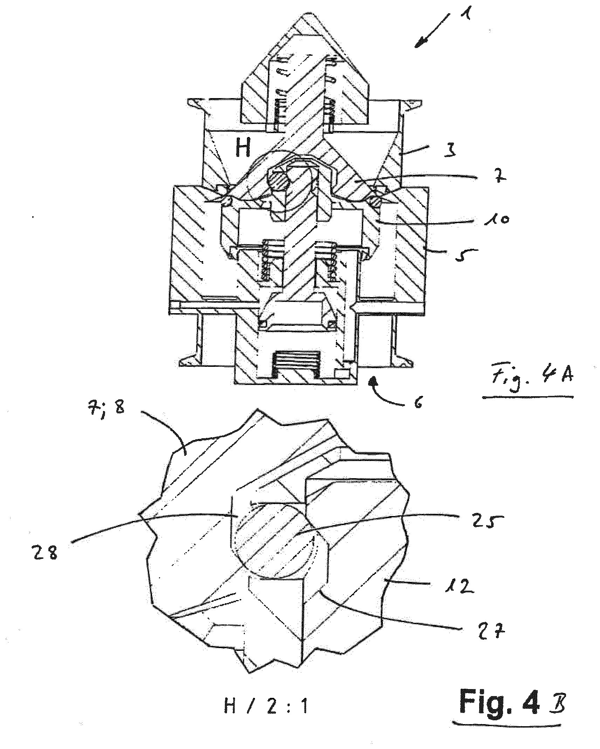

Indem der Betätigungsstift 12 der Betätigungsanordnung 13 in axialer Richtung nach unten bewegt wird, drückt eine erste Schrägfläche 27 gegen das kugelförmige Sperrmittel 25. So wird die Axialbewegung des Betätigungsstifts 12 in eine Radialbewegung des Sperrmittels 25 übersetzt. Das Sperrmittel 25 bewegt sich demnach in die Sperrausnehmung 28, welche in dem oberen Andocksegment 3, nämlich dort im oberen Ventilkörperteil 7, angeordnet ist. Dies zeigen die Figuren 4A/B, wobei Fig. 4B ein Detail der Fig. 4A abbildet. Indem das Sperrmittel 25 in die Sperrausnehmung 28 bewegt wird, werden oberes Andocksegment 3 und unters Andocksegment 5 aneinander mechanisch angekoppelt. Die Vorrichtung 1 wird arretiert, so dass oberes Segment 3 und unteres Segment 5 nicht mehr auseinanderbewegt werden können. Erst durch eine Umkehr der Bewegungsrichtung des Betätigungsstiftes 12 kann die Arretierung gelöst werden.

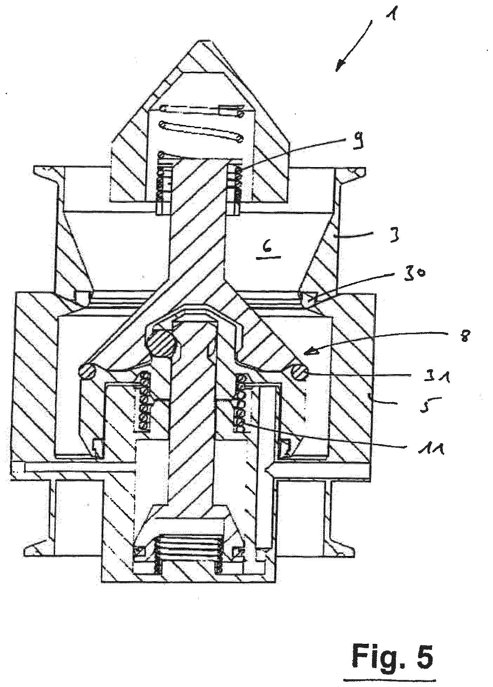

Gemäß der Schnittansicht der Fig. 5A wurde der Betätigungsstift 12 weiter nach unten bewegt, wodurch der Ventilkörper 8 in eine geöffnete Ventilkörperstellung bewegt wird. Der obere Ventilkörperteil 7 steht wegen des Sperrmittels 25 in der Sperrposition mit dem Betätigungsstift 12 in mechanischem Eingriff, so dass beim Bewegen des Betätigungsstiftes 12 auch der obere Ventilkörperteil 7 mitbewegt wird. Dies geschieht gegen die Wirkung der oberen Ventilkörperfeder 9. Indem der obere Ventilkörperteil 7 zusammen mit dem Betätigungsstift 12 abwärts bewegt wird, wird auch der untere Ventilkörperteil 10 mitbewegt, da dieser an dem oberen Ventilkörperteil 7 anliegt. Das Bewegen des unteren Ventilkörperteils 10 erfolgt gegen die Wirkung der unteren Ventilkörperfeder 11.

Im oberen Andockbereich 24 ist eine obere Dichtung 30 vorgesehen und im unteren 23 Bereich eine untere Dichtung 31. Bei geschlossener Ventilkörperstellung dichtet die obere Dichtung 30 den oberen Kanalabschnitt 20 an der Dichtfläche des oberen Ventilkörperteils 7 ab. Bei geschlossener Ventilkörperstellung dichtet die untere Dichtung 31 den unteren Kanalabschnitt 21 im Bereich der Dichtfläche des unteren Ventilkörperteils 10 ab. Bei geöffneter Ventilkörperstellung, d. h. in angedocktem Zustand, sind die Andockbereiche 23, 24 so in Kontakt, dass die obere Dichtung 30 und die untere Dichtung 31 Kontakt haben. Die dichtende Wirkung der oberen (unteren) Dichtung 30 (31) wird in geöffneter Ventilkörperstellung durch die Wirkung der oberen (unteren) Ventilkörperfeder 9 (10) verstärkt. In angedocktem Zustand und bei geöffneter Ventilkörperstellung wird die dichtende Wirkung der oberen und unteren Dichtungen 30, 31 durch die Wirkung der Sperranordnung 26 und/oder der Betätigungsanordnung 13 verstärkt.

Eine Zusammenschau der Figuren 1 bis 5 offenbart die Kinematik der Vorrichtungskomponenten beim Andocken: Nach dem Aufsetzen der Andocksegmente 3, 5 wird die Betätigungsanordnung 13 betätigt, wodurch der Betätigungsstift 12 der Betätigungsanordnung 13 eine Vertikalbewegung ausführt. Gemäß einem ersten Bewegungsabschnitt wird diese Vertikalbewegung in eine Radialbewegung eines Sperrmittels 25 übersetzt, wodurch oberes und unteres Andocksegment 3, 5 arretiert werden. Während des ersten Bewegungsabschnitts des Betätigungsstiftes 12 ist der Ventilkörper 8 in der geschlossenen Ventilkörperstellung. Gemäß einem zweiten, daran anschließenden Bewegungsabschnitt der Vertikalbewegung des Betätigungsstiftes 12 wird der Ventilkörper 8 von einer geschlossenen in eine geöffnete Ventilkörperstellung bewegt, wodurch der Kanal 6 für das Schüttgut durchlässig wird.

Eine Unterbrechung des Schüttgut-Flusses durch den Kanal 6 kann dadurch erreicht werden, dass mit der Betätigungsanordnung 13 der Ventilkörper 8 in seine geschlossene Ventilkörperstellung bewegt wird. Erreicht wird dies durch Richtungsumkehr des zweiten Bewegungsabschnitts der Bewegung des Betätigungsstiftes 12.

Sollen die Segmente 3, 5 wieder abgedockt werden, etwa um das obere (entleerte) Behältermodul gegen ein (volles) Behältermodul auszutauschen, oder zwecks Wechsel des Schüttguts, wäre auch der erste Bewegungsabschnitt der Bewegung des Betätigungsstiftes 12 umzukehren, d. h. der Betätigungsstift 12 wird in die gemäß Fig. 3A dargestellte Position zurückbewegt.

Die Segmente 3, 5 wären dann nicht mehr arretiert und können voneinander entkoppelt werden.

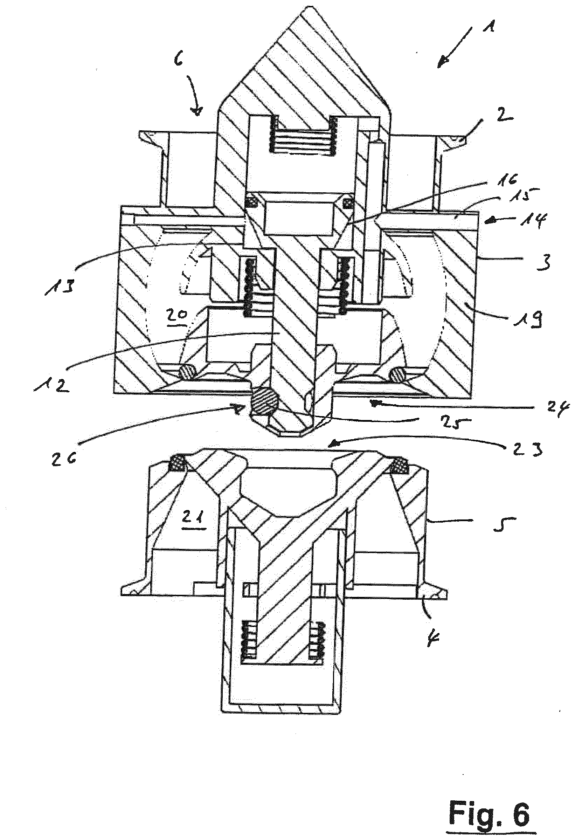

Eine Variante der Vorrichtung 1 gemäß den Figuren 1 bis 5 wird in den Figuren 6 bis 10 dargestellt. Anhand der Schnittansicht gemäß der Fig. 6 befinden sich im unteren Andocksegment 5 und oberen Andocksegment 3 jeweils konisch respektive nahezu konisch geformte Ventilkörperteile 7, 10. Die Bewegungsrichtung des Betätigungsstiftes 12 gemäß der in den Figuren 6 bis 10 gezeigten Vorrichtungsvariante ist beim Andocken identisch zu der Bewegungsrichtung gemäß der in den Figuren 1 bis 5 gezeigten Vorrichtungsvariante: Beim Andocken, Arretieren und anschließenden Öffnen des Kanals wird der Betätigungsstift 12 vertikal nach unten bewegt.

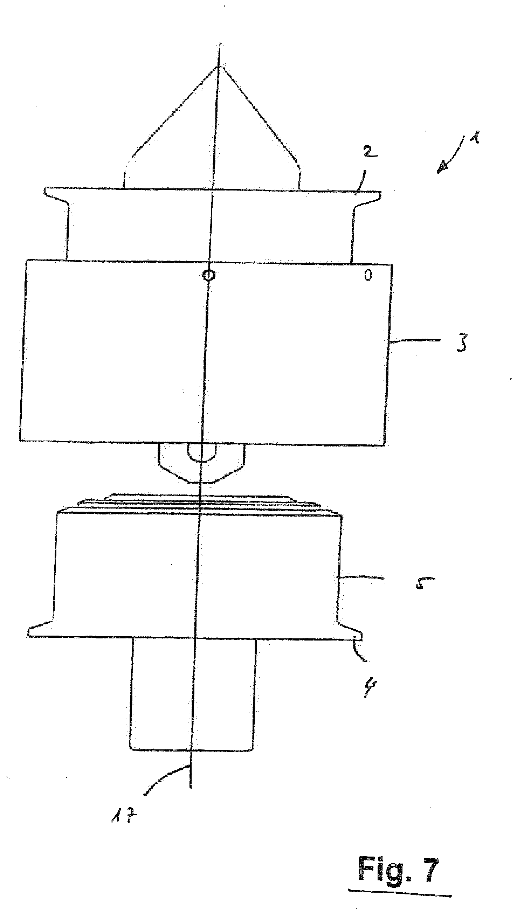

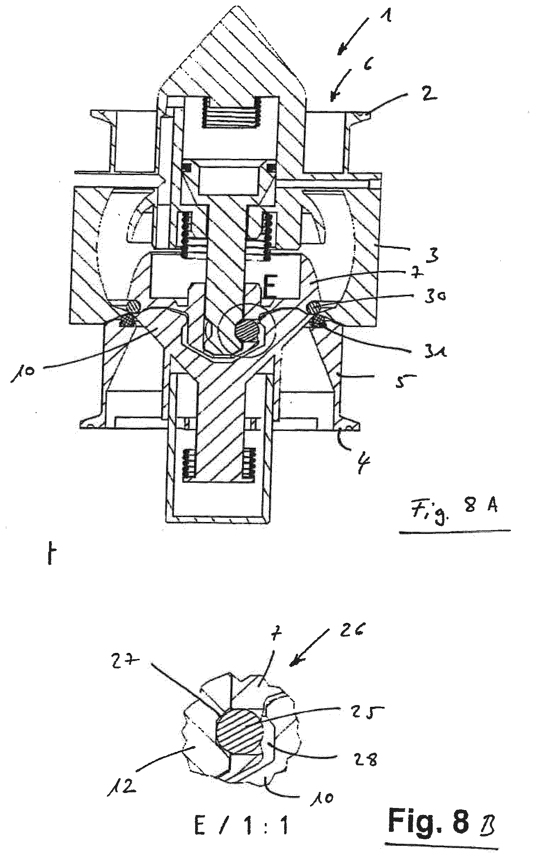

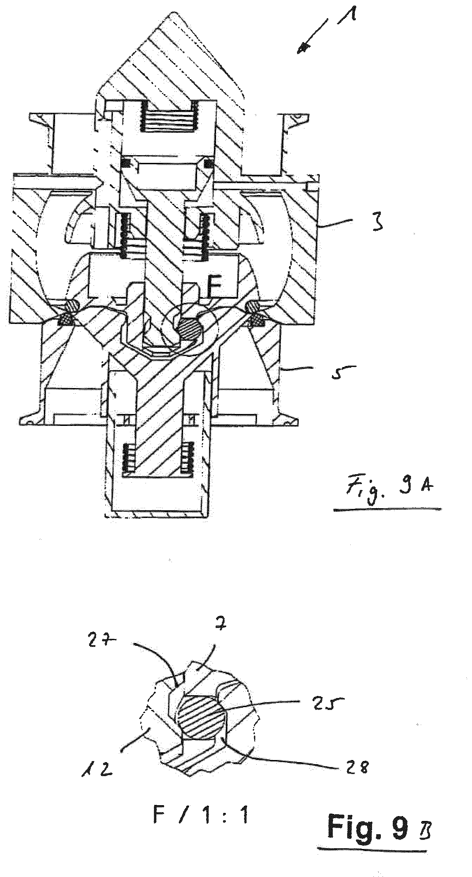

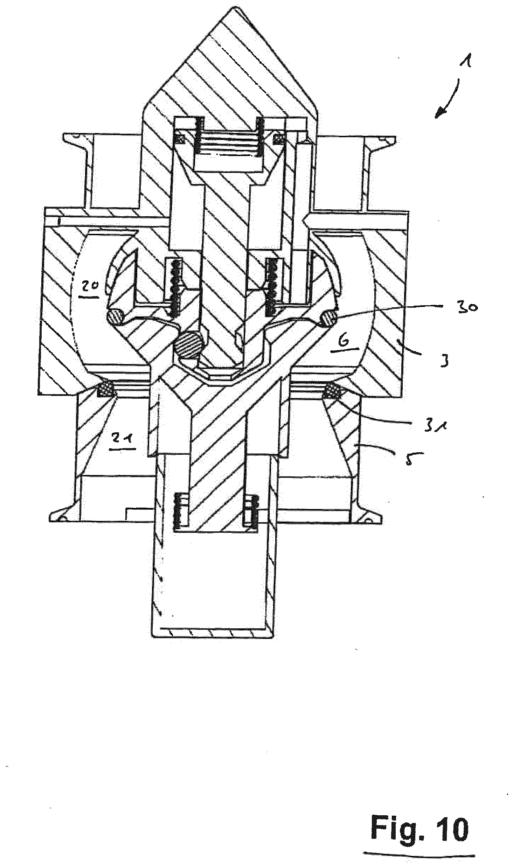

Im Unterschied zu der Variante gemäß der Figuren 1 bis 5 ist bei der in den Figuren 6 bis 10 gezeigten Variante der Betätigungsstift 12 in dem oberen Andocksegment 3 angeordnet. Durch diese Konstruktion nimmt das untere Andocksegment 5 weniger Bauraum ein, was bei einigen Behältervarianten vorteilhaft ist (siehe Fig. 7). Ferner wird durch die Variante gemäß der Figuren 6 bis 10 erreicht, das aktive Andocksegment, d. h. das konstruktiv aufwändigere und somit kostspieligere Segment an der Befüllseite der Behälteranordnung befestigt ist, d. h. an derjenigen Seite, an der beispielsweise eine (Vakuum-)Fördereinrichtung vorgesehen ist. Das passive Segment (Segment ohne Betätigungsanordnung) ist in der Regel an einem Container befestigt. Sofern die Vorrichtung gemäß den Figuren 1 bis 5 bevorzugt beim Behälterentleeren zum Einsatz käme, würde die Variante gemäß der Figuren 6 bis 10 bevorzugt beim Behälterbefüllen zum Einsatz gelangen. Die Andock-, Arretier- und Öffnungs-Kinematik kann einer Zusammenschau der Figuren 6 bis 10 entnommen werden. Zunächst werden die räumlich getrennten (Fig. 6) Andocksegmente 3, 5 aufeinander angeordnet (Fig. 8A/B). Durch die Vertikalbewegung des Betätigungsstiftes 12 wird in einem ersten Bewegungsabschnitt das im oberen Andocksegment 3 angeordnete Sperrmittel 25 in die Sperrausnehmung 28 im unteren Andocksegment 5 bewegt, wodurch die Segmente 2, 5 arretiert werden (Fig. 9A/B). In einem weiteren Bewegungsabschnitt wird der mehrteilige Ventilkörper 8 in die geöffnete Ventilkörperstellung bewegt (Fig. 10). Das Abdocken erfolgt gemäß der Schritte in umgekehrter Reihenfolge: Ventilkörperstellung ändern, Fig. 10, Sperrmittel-Eingriff ändern Fig. 9A/B, Lösen der Arretierung Fig. 8A/B und Trennen der Andocksegmente 3, 5 Fig. 6.

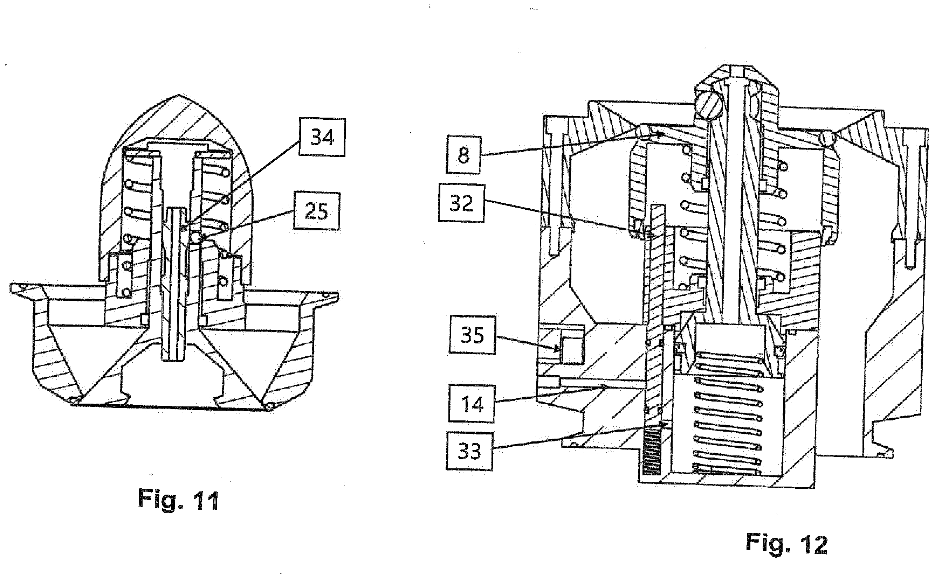

Fig. 11 zeigt eine seitliche Schnittansicht einer Variante einer hierin beschriebenen Andock- und/oder Ventilvorrichtung. Im Zentrum der Vorrichtung ist ein mechanisches Sicherungselement respektive eine mechanische (Zusatz-)Arretierung vorgesehen. Gemäß der in Fig. 11 dargestellten Variante ist die mechanische Arretierung dazu geeignet, das passive Andockelement geschlossen zu halten, solange der (Sicherungs-)Stift 34 in der unteren Position verbleibt.

Es kann alternativ (und in den Figuren nicht dargestellt) vorgesehen sein, dass der Sicherungsstift in dem aktiven Andockelement angeordnet ist. Der Stift 34 ist, beispielsweise von außerhalb der Vorrichtung, so bewegbar, dass die Ventil-Sicherung aktiviert oder deaktiviert wird. Mit der (mechanischen) Arretierung wird erreicht, dass auch in getrenntem Zustand kein Fluid aus einem der Behältermodule unbeabsichtigt entweichen kann. Das Sicherungselement gemäß Fig. 11 hat eine Schließ- respektive Schlüssel-Funktion, insbesondere für das obere Behältermodul.

Die Fig. 12 zeigt eine Vorrichtungs-Variante, bei der eine i. W. mechanische respektive mechanisch-pneumatische Endlageabfrage berücksichtigt ist. Bei Erreichen einer Endlage, d. h. etwa bei einer bestimmungsgemäß "angedockten" Komponentenposition, wird ein Überströmungskanal 33 freigegeben. Hierdurch wird der Überströmungskanal 33 mit einem (Über-)Druck beaufschlagt, nämlich wenn der Kolben in der unteren Stellung ("offen") ist. Der untere Kegel (Ventilkörper 8) bewegt sich nur, wenn die Vorrichtung 1 in korrekt angedockter Stellung ist. Demzufolge wir der Stift 32 nur dann betätigt, und nur dann kann ein, insbesondere pneumatisches, Signal entstehen. Etwa durch einen Druckschalter kann dieses Signal in (an sich bekannter Weise) abgefragt werden. Alternativ zu diesem Endlage-Abfrage-Konzept können elektrische, elektro-magnetische, elektro-optische oder alternative Konzepte berücksichtigt werden, welche in der Fig. 12 nicht dargestellt sind.

Der Fig. 12 kann ferner eine ein Vibrationsmittel 35 umfassende Vibrationseinrichtung zum Beaufschlagen zumindest einer Komponente der Vorrichtung mit zumindest einer, insbesondere mechanischen und auf das Fluid zumindest anteilig übertragbaren, Schwingung, entnommen werden. Das als Schwingungstreiber 35 gebildete Vibrationsmittel beaufschlagt gemäß Fig. 12 zumindest einen der Ventilkörperteile (7, 10) mit einer i. W. mechanischen Schwingung. Diese kann linear, transversal, longitudinal, und/oder anderweitig sein, etwa mit kreisförmigen Anteilen. Die generierte und auf das Fluid übertragene Schwingungsanregung wird auf Fluid-Brücken und/oder Fluid-Klumpen oder vergleichbare (i. w. unerwünschte) Fluid-Formationen übertragen und bewirkt, dass die Formationen aufbrechen und somit ein Fluid-Stau vermieden wird.

**BEZUGSZEICHENLISTE**

| | | | |
|---|---|---|---|
| 1 | Andockvorrichtung / Ventilvorrich-tung | 18 | Kernelement |
| | | 19 | Wand |
| 2 | oberes Verbindungsmittel (Flansch) | 20 | oberer Kanalabschnitt |
| 3 | oberes Andocksegment | 21 | unterer Kanalabschnitt |
| 4 | unteres Verbindungsmittel (Flansch) | 22 | Rückstellfeder |
| 5 | unteres Andocksegment | 23 | unterer Andockbereich |
| 6 | Kanal | 24 | oberer Andockbereich |
| 7 | oberes Ventilkörperteil | 25 | Sperrmittel |
| 8 | Ventilkörper | 26 | Sperranordnung |
| 9 | obere Ventilkörperfeder | 27 | (erste) Schrägfläche |
| 10 | unteres Ventilkörperteil | 28 | Sperrausnehmung |
| 11 | untere Ventilkörperfeder | 29 | Steg |
| 12 | Betätigungsstift | 30 | obere Dichtung |
| 13 | Betätigungsanordnung | 31 | untere Dichtung |
| 14 | Anschlussmittel | 32 | Stift |
| 15 | Leitung | 33 | Überströmungskanal |
| 16 | Wirkfläche | 34 | Sicherungsstift |
| 17 | (Kanal-)Symmetrieachst | 35 | Schwingungstreiber |

## Patentansprüche

1. Andockvorrichtung (1) zum mechanischen Verbinden, nämlich zum An- und Abdocken, von einem oberen Behältermodul eines mehrteiligen Behälters für ein Fluid und einem unteren Behältermodul des mehrteiligen Behälters, wobei
die Andockvorrichtung (1) ein oberes Andocksegment (3) umfasst, welches mit einem oberen Verbindungsmittel (2) an einer Öffnung des oberen Behältermoduls befestigbar ist, und ein unteres Andocksegment (5) umfasst, welches mit einem unteren Verbindungsmittel (4) an einer Öffnung des unteren Behältermoduls befestigbar ist, wobei die Andockvorrichtung derart ausgebildet ist, dass
das Fluid schwerkraftbedingt und/oder druckbedingt von dem oberen Behältermodul durch einen Kanal (6) der Andockvorrichtung (1) dann in das untere Behältermodul gelangt, oder auftriebbedingt und/oder druckbedingt von dem unteren in das obere Behältermodul, wenn sich zumindest ein mittels einer in dem oberen und/oder in dem unteren Andocksegment (3, 5) angeordneten Betätigungsanordnung (13) bewegbarer Ventilkörper (8) in dem Kanal (6) der Vorrichtung (1) in einer geöffneten Ventilkörperstellung befindet,
in dem oberen Andocksegment (3) ein oberer Kanalabschnitt (20) angeordnet ist und in dem unteren Andocksegment (5) ein unterer Kanalabschnitt (21),
ein oberer Andockbereich (24) des oberen Kanalabschnitts (20) und/oder des oberen Andocksegmentes (3) und ein unterer Andockbereich (23) des unteren Kanalabschnitts (21) und/oder des unteren Andocksegments (5), insbesondere durch Formschluss und/oder Kraftschluss, fluiddicht so ineinander und/oder aneinander anordbar sind, dass das Fluid durch den nach außen dichten Kanal (6) bei geöffneter Ventilkörperstellung hindurchfließt, und
in dem oberen Kanalabschnitt (20) und/oder in dem unteren Kanalabschnitt (21) eine Betätigungsanordnung (13) angeordnet ist, mit der der Ventilkörper (8) so betätigbar ist, dass er von einer geöffneten Ventilkörperstellung in eine geschlossene Ventilkörperstellung oder von einer geschlossenen Ventilkörperstellung in eine geöffnete Ventilkörperstellung bewegbar ist,
**dadurch gekennzeichnet, dass** die Betätigungsanordnung (13) zumindest eine zumindest ein Sperrmittel (25) umfassende Sperranordnung (26) umfasst, wobei oberes und unteres Andocksegment (3, 5) miteinander stabil verbindbar, insbesondere arretierbar, sind, indem das Sperrmittel (25) in eine Sperrposition gelangt, wobei
beim Andockvorgang beim Betätigen der Betätigungsanordnung (13) zuerst das Sperrmittel (25) betätigbar ist und anschließend der Ventilkörper (8), und
beim Abdockvorgang beim Betätigen der Betätigungsanordnung (13) zuerst der Ventilkörper (8) betätigbar ist und anschließend das Sperrmittel (25).

2. Vorrichtung (1) nach Anspruch 1, **dadurch gekennzeichnet, dass** der Kanal (6) einen kreisrunden Querschnitt aufweist, insbesondere zumindest abschnittsweise einen ringförmigen Querschnitt, wobei die Kreissymmetrie und/oder Ringsymmetrie des Kanals eine Kanal-Symmetrieachse (17) umfasst.

3. Vorrichtung (1) nach Anspruch 1 oder 2, **gekennzeichnet durch** ein in dem Kanal (6), insbesondere entlang der Kanal-Symmetrieachse (17), angeordnetes Kernelement (18), in welchem die Betätigungsanordnung (13) und/oder die Sperranordnung (26), insbesondere zumindest teilweise beweglich, angeordnet ist/sind.

4. Vorrichtung (1) nach einem der Ansprüche 1 bis 3, **dadurch gekennzeichnet, dass** ein Betätigungsstift (12) der Betätigungsanordnung (13) parallel zur oder entlang der Kanal-Symmetrieachse (17) bewegbar ist, und dass das Sperrmittel (25) der Sperranordnung (26) in radialer Richtung bewegbar ist wobei, vorzugsweise, die Betätigungsanordnung (13) einen Betätigungsstift (12) zum Manipulieren des Ventilkörpers (8) umfasst, welcher eine erste Schrägfläche (27) umfasst, an welcher das Sperrmittel (25) der Sperranordnung (26) anliegt, so dass bei einer axialen Bewegung des Betätigungsstifts (12) das Sperrmittel (25) mit radialer Richtungskomponente bewegbar ist.

5. Vorrichtung (1) nach einem der Ansprüche 1 bis 4, **dadurch gekennzeichnet,**
**dass** das zumindest eine Sperrmittel (25) als Kugel oder als Tonne oder als Keil oder als Stift gebildet ist, und
**dass** das Sperrmittel (25) beim Andocken in eine Sperrausnehmung (28) bewegbar ist, wobei
das Sperrmittel (25) im unteren Andocksegment (5) und die Sperrausnehmung (28) im oberen Andocksegment (3) angeordnet sind, oder
das Sperrmittel (25) im oberen Andocksegment (3) und die Sperrausnehmung (28) im unteren Andocksegment (5) angeordnet sind.

6. Vorrichtung (1) nach einem der Ansprüche 1 bis 5, **dadurch gekennzeichnet,**
**dass** der Ventilkörper (8) zumindest abschnittsweise kegelförmig gebildet ist, und/oder
**dass** der Ventilkörper (8) gegen die Wirkung zumindest einer Ventilkörper-Feder (9, 11) aus der geschlossenen Stellung in die geöffnete Stellung bewegbar ist, und/oder
**dass** der Ventilkörper (8) mehrteilig, insbesondere zweiteilig, gebildet ist.

7. Vorrichtung (1) nach einem der Ansprüche 1 bis 6, **dadurch gekennzeichnet, dass** das obere Andocksegment (3) und/oder das untere Andocksegment (5) eine Segment-Dichtfläche umfasst, welche in geschlossener Ventilkörperstellung mit zumindest einer Ventilkörper-Dichtfläche in Kontakt steht,
wobei, vorzugsweise, die Segment-Dichtfläche und die Ventilkörper-Dichtfläche ringförmig gebildet sind, und/oder
wobei, vorzugsweise, in oder an der Segment-Dichtfläche und/oder in oder an der Ventilkörperdichtfläche zumindest ein, insbesondere jeweils ein, Dichtelement (30, 31) angeordnet ist, und/oder
wobei, vorzugsweise, zumindest ein Dichtelement (30, 31) durch die Wirkung einer Ventilkörper-Feder (9, 11) dichtend mit einer Dichtkraft beaufschlagbar ist.

8. Vorrichtung (1) nach einem der Ansprüche 1 bis 7, **dadurch gekennzeichnet, dass** im oder am oberen Andockbereich (24) und/oder im oder am unteren Andockbereich (23) zumindest ein Andock-Dichtelement, insbesondere jeweils ein Andock-Dichtelement, angeordnet ist.

9. Vorrichtung (1) nach einem der Ansprüche 1 bis 8, **dadurch gekennzeichnet, dass** ein Bewegen des Ventilkörpers (8) in die geöffnete Ventilkörperstellung durch die Betätigungsanordnung (13) nur dann erfolgt, wenn das Sperrmittel (25) der Sperranordnung (26) in der Sperrposition ist, wobei, vorzugsweise, die Betätigungsanordnung (13) mechanisch, hydraulisch und/oder pneumatisch betätigbar ist.

10. Vorrichtung (1) nach einem der Ansprüche 1 bis 9, **dadurch gekennzeichnet, dass** die Betätigungsanordnung (13) und/oder der Betätigungsstift (12) eine, insbesondere schräge und/oder konische, Wirkfläche (16) umfasst, über die eine Kraft und/oder ein Moment auf die Betätigungsanordnung (13) und/oder den Betätigungsstift (12) übertragbar ist.

11. Vorrichtung (1) nach einem der Ansprüche 1 bis 10, **dadurch gekennzeichnet,**
**dass** die Betätigungsanordnung (13) und/oder der Betätigungsstift (12) gegen die Wirkung einer Rückstellfeder (22) betätigbar ist, und/oder
**dass** die Betätigungsanordnung magnetisch, insbesondere elektromagnetisch, betätigbar ist.

12. Vorrichtung (1) nach einem der Ansprüche 1 bis 11, **dadurch gekennzeichnet, dass** der Ventilkörper (8) zweiteilig gebildet ist, wobei ein oberer Ventilkörperteil (7) in dem oberen Andocksegment (3) angeordnet ist und ein unterer Ventilkörperteil (10) in dem unteren Andocksegment (5).

13. Vorrichtung (1) nach einem der Ansprüche 1 bis 12, **dadurch gekennzeichnet, dass** in oder an dem oberen und/oder unteren Andockelement (3, 5) ein, insbesondere in axial- oder Längsrichtung, bewegbares Sicherungselement (34) angeordnet ist, womit die Andockelemente (3, 5) der Vorrichtung (1) in jeweils geschlossener Ventilkörperstellung gegen Öffnen mechanisch sicherbar sind.

14. Vorrichtung (1) nach einem der Ansprüche 1 bis 13, **dadurch gekennzeichnet, dass** an dem oberen und/oder unteren Andockelement (3, 5) ein Positions- oder Lage-Erfassungs-Mittel (32) angeordnet ist, womit die Position oder Lage, insbesondere die Endposition oder Endlage, des oberen/unteren Andockelementes (3, 5) relativ zum unteren/oberen Andockelement (3, 5) erfassbar ist, insbesondere mechanisch, pneumatisch, elektrisch, elektronisch, elektro-magnetisch und/oder elektrooptisch.

15. Vorrichtung (1) nach einem der Ansprüche 1 bis 14, **dadurch gekennzeichnet, dass** zumindest ein druckausgleichendes Mittel vorgesehen ist, mit dem ein teilweiser oder vollständiger Druckausgleich zwischen oberem Behältermodul und unterem Behältermodul, insbesondere während und/oder nach einer Fluidbewegung, herstellbar ist, wobei das druckausgleichende Mittel bevorzugt als Kanal (Bypass) zwischen oberem und unterem Kanalabschnitt (20, 21) gebildet ist.

16. Vorrichtung (1) nach einem der Ansprüche 1 bis 15, **dadurch gekennzeichnet, dass** die Vorrichtung (1) zumindest ein stoßbegasendes Mittel und/oder druckbegasendes Mittel umfasst, mit dem zumindest eine Vorrichtungskomponente, insbesondere eine obere/untere Dichtung (30, 31), mit einer, insbesondere stoßweisen, Gasströmung zum Reinigen der angeströmten Komponente beaufschlagbar ist.

17. Vorrichtung (1) nach einem der Ansprüche 1 bis 16, **dadurch gekennzeichnet, dass** in oder an dem oberen und/oder unteren Ventilkörperteil (7, 10) zumindest ein Vibrationsmittel (35) angeordnet ist, womit der obere und/oder untere Ventilkörperteil (7, 10) mit zumindest einer, insbesondere mechanischen, Schwingung beaufschlagbar ist.

18. Vorrichtung zum Dosieren des Flusses eines Fluids aus einem oberen Behältermodul eines Behälters in ein unteres Behältermodul des Behälters, oder von einem unteren Behältermodul in ein oberes Behältermodul, insbesondere Dosiervorrichtung, **gekennzeichnet durch** eine Vorrichtung (1) nach einem der Ansprüche 1 bis 17, aufweisend eine Steuer- und/oder Regelanordnung zur Steuerung und/oder Regelung einer Ventilkörperstellung.

19. Vorrichtung nach Anspruch 18, **dadurch gekennzeichnet, dass** eine zumindest ein Vibrationsmittel (35) umfassende Vibrationseinrichtung zum Beaufschlagen zumindest einer Komponente der Vorrichtung mit zumindest einer, insbesondere mechanischen und auf das Fluid zumindest anteilig übertragbaren, Schwingung vorgesehen ist.

20. Behälter für ein Fluid umfassend zumindest ein Behältermodul oder umfassend ein oberes und ein unteres Behältermodul, **dadurch gekennzeichnet, dass** das Behältermodul oder oberes und/oder unteres Behältermodul mit einer Vorrichtung (1) nach einem der Ansprüche 1 bis 19 verbunden ist/sind.

## Claims

1. A docking device (1) for the mechanical connection, namely for the docking and undocking of an upper container module of a multi-part container for a fluid, and a lower container module of the multi-part container, wherein
the docking device (1) comprises an upper docking segment (3), which can be attached to an opening of the upper container module with an upper connecting means (2), and a lower docking segment (5), which can be attached to an opening of the lower container module with a lower connecting means (4), wherein
the docking device is designed such that the fluid then passes from the upper container module through a duct (6) of the docking device (1) into the lower container module, as conditioned by gravity and/or pressure, or from the lower container module into the upper container module as conditioned by buoyancy and/or pressure,
if at least one valve body (8), which can be moved by means of an actuating arrangement (13) arranged in the upper, and/or in the lower, docking segment (3, 5), is located in the duct (6) of the device (1) in an open valve body position,
an upper duct section (20) is arranged in the upper docking segment (3), and a lower duct section (21) is arranged in the lower docking segment (5), an upper docking region (24) of the upper duct section (20) and/or of the upper docking segment (3), and a lower docking region (23) of the lower duct section (21) and/or of the lower docking segment (5), can be arranged in a fluid-tight manner in one another, and/or on one another, in particular by means of a form-fit, and/or a force-fit, connection, such that the fluid flows through the outwardly-sealed duct (6) when the valve body is in the open position,
and an actuating arrangement (13) is arranged in the upper duct section (20) and/or in the lower duct section (21), by means of which the valve body (8) can be actuated such that it can be moved from an open valve body position into a closed valve body position, or from a closed valve body position into an open valve body position,
**characterised in that**, the actuating arrangement (13) comprises at least one locking arrangement (26), comprising at least one locking means (25), wherein upper and lower docking segments (3, 5) can be stably connected to one another, in particular can be locked, by the movement of the locking means (25) into a locking position, wherein
during the docking process, when the actuating arrangement (13) is actuated, the locking means (25) can first be actuated, and then the valve body (8), and during the undocking process, when the actuating arrangement (13) is actuated, the valve body (8) can first be actuated, and then the locking means (25).

2. The device (1) according to Claim 1, **characterised in that**, the duct (6) has a circular cross-section, in particular an annular cross-section, at least in some sections, wherein the circular symmetry and/or annular symmetry of the duct surrounds a duct axis of symmetry (17) .

3. The device (1) according to Claim 1 or 2, **characterised by**, a core element (18) arranged in the duct (6), in particular along the duct axis of symmetry (17), in which the actuating arrangement (13) and/or the locking arrangement (26) is/are arranged, in particular in at least a partially movable manner.

4. The device (1) according to one of the Claims 1 to 3, **characterised in that**, an actuating pin (12) of the actuating arrangement (13) can be moved parallel to, or along, the duct axis of symmetry (17), and **in that**, the locking means (25) of the locking arrangement (26) can be moved in the radial direction, wherein the actuating arrangement (13) preferably comprises an actuating pin (12) for the manipulation of the valve body (8), which comprises a first inclined surface (27), against which the locking means (25) of the locking arrangement (26) abuts, so that upon an axial movement of the actuating pin (12), the locking means (25) can be moved with a radial directional component.

5. The device (1) according to one of the Claims 1 to 4, **characterised in that**,
the at least one locking means (25) is formed as a ball, or as a barrel, or as a wedge, or as a pin,
and **in that**, upon docking, the locking means (25) can be moved into a locking recess (28), wherein
the locking means (25) are arranged in the lower docking segment (5), and the locking recess (28) is arranged in the upper docking segment (3), or
the locking means (25) are arranged in the upper docking segment (3) and the locking recess (28) is arranged in the lower docking segment (5).

6. The device (1) according to one of the Claims 1 to 5, **characterised in that**,
the valve body (8) is of conical form, at least in some sections, and/or **in that**,
the valve body (8) can be moved from the closed position to the open position against the action of at least one valve body spring (9, 11), and/or **in that**,
the valve body (8) is formed in a number of parts, in particular in two parts.

7. The device (1) according to one of the Claims 1 to 6, **characterised in that**, the upper docking segment (3), and/or the lower docking segment (5), comprises a segment sealing surface, which in the closed valve body position is in contact with at least one valve body sealing surface, wherein
the segment sealing surface and the valve body sealing surface are preferably of annular form, and/or
wherein at least one, in particular one sealing element (30, 31) in each case, is preferably arranged in or on the segment sealing surface, and/or in or on the valve body sealing surface, and/or
wherein at least one sealing element (30, 31) can preferably be acted upon in a sealing manner by a sealing force, by means of the action of a valve body spring (9, 11).

8. The device (1) according to one of the Claims 1 to 7, **characterised in that**, at least one docking sealing element, in particular one docking sealing element in each case, is arranged in or on the upper docking region (24). and/or in or on the lower docking region (23).

9. The device (1) according to one of the Claims 1 to 8, **characterised in that**, a movement of the valve body (8) into the open valve body position by means of the actuating arrangement (13) only then occurs if the locking means (25) of the locking arrangement (26) is in the locking position, wherein the actuating arrangement (13) can preferably be actuated mechanically, hydraulically, and/or pneumatically.

10. The device (1) according to one of the Claims 1 to 9, **characterised in that**, the actuating arrangement (13), and/or the actuating pin (12), comprises an active surface (16), in particular an inclined, and/or a conical, active surface, via which a force and/or a moment can be transmitted to the actuating arrangement (13). and/or to the actuating pin (12).

11. The device (1) according to one of the Claims 1 to 10, **characterised in that**,
the actuating arrangement (13), and/or the actuating pin (12), can be actuated against the action of a return spring (22), and/or **in that**,
the actuating arrangement can be actuated magnetically, in particular electro-magnetically.

12. The device (1) according to one of the Claims 1 to 11, **characterised in that**, the valve body (8) is formed in two parts, wherein an upper valve body part (7) is arranged in the upper docking segment (3), and a lower valve body part (10) is arranged in the lower docking segment (5).

13. The device (1) according to one of the Claims 1 to 12, **characterised in that**, a securing element (34), which can be moved, in particular in the axial or longitudinal direction, is arranged in or on the upper, and/or the lower, docking element (3, 5), with which the docking elements (3, 5) of the device (1) can be mechanically secured against opening in the respectively closed valve body position.

14. The device (1) according to one of the Claims 1 to 13, **characterised in that**, a position or attitude detection means (32) is arranged on the upper and/or lower docking element (3, 5), with which the position or attitude, in particular the end position or end attitude, of the upper/lower docking element (3, 5) relative to the lower/upper docking element (3, 5), can be detected, in particular mechanically, pneumatically, electrically, electronically, electro-magnetically, and/or electro-optically.

15. The device (1) according to one of the Claims 1 to 14, **characterised in that**, at least one pressure-equalising means is provided, by means of which a partial or complete pressure equalisation between the upper container module and the lower container module can be produced, in particular during, and/or after, a fluid movement, wherein the pressure-equalising means is preferably formed as a duct (bypass) between the upper and lower duct sections (20, 21).

16. The device (1) according to one of the Claims 1 to 15, **characterised in that**, the device (1) comprises at least one intermittent-gasification means and/or pressure-gasification means, with which at least one device component, in particular an upper/lower seal (30, 31), can be acted upon by a gas flow, in particular an intermittent gas flow, for the cleaning of the component against which the flow acts.

17. The device (1) according to one of the Claims 1 to 16, **characterised in that**, at least one vibration means (35) is arranged in or on the upper and/or lower valve body part (7, 10), with which means the upper and/or lower valve body part (7, 10) can be subjected to at least one, in particular a mechanical, vibration.

18. A device for the dosing of the flow of a fluid from an upper container module of a container into a lower container module of the container, or from a lower container module into an upper container module, in particular a dosing device, **characterised by**, a device (1) according to one of the Claims 1 to 17, comprising a control and/or regulation arrangement for the control and/or regulation of a valve body position.

19. The device according to Claim 18, **characterised in that**, a vibration device comprising at least one vibration means (35) is provided for the subjection of at least one component of the device to at least one vibration, in particular a mechanical vibration, which can be transmitted, at least proportionally, to the fluid.

20. A container for a fluid, comprising at least one container module, or comprising an upper and a lower container module, **characterised in that**, the container module, or the upper and/or lower container module, is/are connected to a device (1) according to one of the Claims 1 to 19.

## Revendications

1. Dispositif d'arrimage (1) pour l'assemblage mécanique, notamment pour l'arrimage et le désarrimage, d'un module de conteneur supérieur d'un conteneur en plusieurs parties pour un fluide et un module de conteneur inférieur du conteneur en plusieurs parties, sachant que
le dispositif d'arrimage (1) comprend un segment d'arrimage supérieur (3), lequel peut être fixé avec un moyen d'assemblage supérieur (2) à une ouverture du module de conteneur supérieur et comprend un segment d'arrimage inférieur (5), lequel peut être fixé avec un moyen d'assemblage inférieur (4) à une ouverture du module de conteneur inférieur,
sachant que le dispositif d'arrimage est constitué de telle manière que le fluide parvient ensuite sous l'effet de la gravité et/ou sous l'effet de la pression du module de conteneur supérieur par un conduit (6) du dispositif d'arrimage (1) dans le module de conteneur inférieur ou sous l'effet de force ascensionnelle et/ou sous l'effet de la pression du module de conteneur inférieur dans le module de conteneur supérieur, lorsque qu'au moins un corps de soupape (8) mobile au moyen d'un système d'actionnement (13) disposé dans le segment d'arrimage supérieur et/ou inférieur (3, 5) se trouve dans le conduit (6) du dispositif (1) dans une position de corps de soupape ouverte, une section de conduit supérieure (20) est disposée dans le segment d'arrimage supérieur (3), et une section de conduit inférieure (21) dans le segments d'arrimage inférieur (5), une zone d'arrimage supérieure (24) de la section de conduit supérieure (20) et/ou du segment d'arrimage supérieur (3) et une zone d'arrimage inférieure (23) de la section de conduit inférieure (21) et/ou du segment d'arrimage inférieur (5) en particulier par conformité de forme et/ou conformité de force peuvent être disposées de manière étanche aux fluides l'une dans l'autre et/ou l'une sur l'autre de telle manière que le fluide s'écoule à travers le conduit (6) étanche vers l'extérieur en position de corps de soupape ouverte, et
un système d'actionnement (13) est disposé dans la section de conduit supérieure (20) et/ou dans la section de conduit inférieure (21) avec lequel le corps de soupape (8) peut être actionné de telle sorte qu'il peut être déplacé d'une position de corps de soupape ouverte dans une position de corps de soupape fermée ou d'une position de corps de soupape fermée dans une position de corps de soupape ouverte,
**caractérisé en ce que** le système d'actionnement (13) comprend au moins un système de blocage (26) comprenant au moins un moyen de blocage (25), sachant que le segment d'arrimage supérieur et inférieur (3, 5) peuvent être assemblés l'un à l'autre de façon stable, en particulier bloqués, le moyen de blocage (25) parvenant dans une position de blocage, sachant que
lors de l'opération d'arrimage en actionnant le système d'actionnement (13), le moyen de blocage (25) peut être d'abord actionné et ensuite le corps de soupape (8), et
lors de l'opération de désarrimage, en actionnant le système d'actionnement (13), le corps de soupape (8) peut être d'abord actionné et ensuite le moyen de blocage (25).

2. Dispositif (1) selon la revendication 1, **caractérisé en ce que** le conduit (6) comporte une section transversale circulaire, en particulier au moins par endroits une section transversale annulaire, sachant que la symétrie circulaire et la symétrie annulaire du conduit comprend un axe de symétrie de conduit (17).

3. Dispositif (1) selon la revendication 1 ou 2, **caractérisé par** un élément central (18) disposé dans le conduit (6) en particulier le long de l'axe de symétrie de conduit (17), dans lequel le système d'actionnement (13) et/ou le système de blocage (26) est/sont disposé(s), en particulier au moins en partie, mobile (s) .

4. Dispositif (1) selon l'une quelconque des revendications 1 à 3, **caractérisé en ce qu'**une tige d'actionnement (12) du système d'actionnement (13) peut être mobile parallèlement à ou le long de l'axe de symétrie de conduit (17) et **en ce que** le moyen de blocage (25) du système de blocage (26) peut être déplacé en direction radiale, sachant de préférence que le système d'actionnement (13) comprend une tige d'actionnement (12) pour la manipulation du corps de soupape (8), lequel comprend une première surface inclinée (27) sur laquelle vient en application le moyen de blocage (25) du système de blocage (26) de telle manière que lors d'un mouvement axial de la tige d'actionnement (12), le moyen de blocage (25) peut être déplacé avec un composant directionnel radial.

5. Dispositif (1) selon l'une quelconque des revendications 1 à 4, **caractérisé en ce qu'**
au moins un moyen de blocage (25) est formé sous la forme de sphère ou de tonnelet ou sous la forme de coin ou de tige, et
**en ce que** le moyen de blocage (25) est disposé dans un évidement de blocage (28), sachant que
le moyen de blocage (25) est disposé dans le segment d'arrimage supérieur (5) et l'évidement de blocage (28) dans le segment d'arrimage supérieur (3), ou
le moyen de blocage (25) est disposé dans le segment d'arrimage supérieur (3) et l'évidement de blocage (28) dans le segment d'arrimage inférieur (5).

6. Dispositif (1) selon l'une quelconque des revendications 1 à 5, **caractérisé en ce que**
le corps de soupape (8) est formé au moins par endroits, en forme de cône, et/ou
**en ce que** le corps de soupape (8) peut être déplacé de la position fermée à la position ouverte sous l'effet d'au moins un ressort de corps de soupape (9, 11), et/ou
**en ce que** le corps de soupape (8) est formé de plusieurs parties, en particulier de deux parties.

7. Dispositif (1) selon l'une quelconque des revendications 1 à 6, **caractérisée en ce que** le segment d'arrimage supérieur (3) et/ou le segment d'arrimage inférieur (5) comprend une surface d'étanchéité segmentaire, laquelle est en contact à la position de corps de soupape fermée avec au moins une surface d'étanchéité de corps de soupape,
sachant de préférence que la surface d'étanchéité segmentaire et la surface d'étanchéité de corps de soupape sont de forme annulaire, et/ou
sachant de préférence qu'au moins un, en particulier respectivement un élément d'étanchéité (30, 31) est disposé dans ou sur la surface d'étanchéité segmentaire et/ou dans ou sur la surface d'étanchéité de corps de soupape, et/ou
sachant de préférence qu'au moins un élément d'étanchéité (30, 31) peut être sollicité de façon étanchéifiante avec une force d'étanchéification par l'effet d'un ressort de corps de soupape (9, 11).

8. Dispositif (1) selon l'une quelconque des revendications 1 à 7, **caractérisé en ce qu'** au moins un élément d'étanchéité d'arrimage, en particulier respectivement un élément d'étanchéité d'arrimage, est disposé dans ou sur la zone d'arrimage supérieure (24) et/ou dans ou sur la zone d'arrimage inférieure (23).

9. Dispositif (1) selon l'une quelconque des revendications 1 à 8, **caractérisé en ce qu'**un déplacement du corps de soupape (8) dans la position de corps de soupape ouverte ne peut ensuite avoir lieu par le système d'actionnement (13) que lorsque le moyen de blocage (25) du système de blocage (26) est dans la position de blocage, sachant de préférence que le système d'actionnement (13) peut être actionné de façon mécanique, hydraulique et/ou pneumatique.

10. Dispositif (1) selon l'une quelconque des revendications 1 à 9, **caractérisé en ce que** le système d'actionnement (13) et/ou la tige d'actionnement (12) comprend une surface fonctionnelle (16) en particulier inclinée et/ou conique par le biais de laquelle une force et/ou un couple peut être transmis au système d'actionnement (13) et/ou à la tige d'actionnement (12) .

11. Dispositif (1) selon l'une quelconque des revendications 1 à 10, **caractérisé en ce que** le système d'actionnement (13) et/ou la tige d'actionnement (12) peuvent être actionnés sous l'effet d'un ressort de rappel (22), et/ou
**en ce que** le système d'actionnement (13) peut être actionné de façon magnétique, en particulier de façon électromagnétique.

12. Dispositif (1) selon l'une quelconque des revendications 1 à 11, **caractérisé en ce que** le corps de soupape (8) est formé de deux parties, sachant qu'une partie de corps de soupape supérieure (7) est disposée dans le segment d'arrimage supérieur (3) et une partie de corps de soupape inférieure (10) dans le segment d'arrimage inférieur (5).

13. Dispositif (1) selon l'une quelconque des revendications 1 à 12, **caractérisé en ce que** dans ou sur l'élément d'arrimage supérieur et/ou inférieur (3, 5) est disposé un élément de sécurisation mobile (34), en particulier dans la direction axiale ou longitudinale, avec lequel les éléments d'arrimage (3, 5) du dispositif (1) peuvent être mécaniquement sécurisés contre toute ouverture dans la position de corps de soupape respectivement fermée.

14. Dispositif (1) selon l'une quelconque des revendications 1 à 13, **caractérisé en ce qu'**un moyen de saisie de positionnement ou de mise en place (32) est disposé sur l'élément d'arrimage supérieur et/ou inférieur (3, 5), avec lequel le positionnement ou la mise en place, en particulier la position finale ou la mise en place finale de l'élément d'arrimage supérieur/inférieur (3, 5) peut être saisi par rapport à l'élément d'arrimage inférieur/supérieur (3, 5), en particulier de façon mécanique, pneumatique, électrique, électronique, électromagnétique et/ou électrooptique.

15. Dispositif (1) selon l'une quelconque des revendications 1 à 14, **caractérisé en ce qu'**au moins un moyen d'équilibre de pression est prévu avec lequel un équilibre de pression partiel ou complet peut être établi entre le module de conteneur supérieur et le module de conteneur inférieur, en particulier pendant et/ou après un mouvement de fluide, sachant que le moyen d'équilibre de pression est formé de préférence sous la forme d'un conduit (dérivation) entre la section de conduit supérieure et la section de conduit inférieure (20, 21).

16. Dispositif (1) selon l'une quelconque des revendications 1 à 15, **caractérisé en ce que** le dispositif (1) comprend au moins un moyen à gaz par à-coups et/ou à gaz par pression avec lequel au moins un composant de dispositif, en particulier un joint d'étanchéité supérieur/inférieur (30, 31) peut être sollicité par un écoulement de gaz, en particulier par à-coups pour nettoyer le composant balayé.

17. Dispositif (1) selon l'une quelconque des revendications 1 à 16, **caractérisé en ce qu'**au moins un moyen de vibration (35) est disposé dans ou sur la partie de corps de soupape supérieure et/ou inférieure (7, 10), avec lequel la partie de corps de soupape supérieure et/ou inférieure (7, 10) peut être sollicitée par au moins une vibration, en particulier mécanique.

18. Dispositif de dosage du flux d'un fluide à partir d'un module de conteneur supérieur d'un conteneur dans un module de conteneur inférieur du conteneur ou d'un module de conteneur inférieur dans un module de conteneur supérieur, en particulier dispositif de dosage, **caractérisé par** un dispositif (1) selon l'une quelconque des revendications 1 à 17, comportant un système de commande et/ou de régulation pour la commande et/ou la régulation d'une position de corps de soupape.

19. Dispositif selon la revendication 18, **caractérisé en ce qu'**au moins un moyen de vibration (35) est prévu comprenant un système de vibration pour appliquer au moins à un composant du dispositif au moins une vibration en particulier mécanique et transmissible au fluide au moins proportionnellement.

20. Conteneur pour un fluide comprenant au moins un module de conteneur ou comprenant un module de conteneur supérieur et un module de conteneur inférieur, **caractérisé en ce que** le module de conteneur ou le module de conteneur supérieur et/ou le module de conteneur inférieur est/sont relié(s) à un dispositif (1) selon l'une quelconque des revendications 1 à 19.
